# EUROPÄISCHE PATENTSCHRIFT

(11) **EP 2 221 272 B1**
(45) Veröffentlichungstag und Bekanntmachung des Hinweises auf die Patenterteilung: **31.10.2018**
(21) Anmeldenummer: 10153774.4
(22) Anmeldetag: 17.02.2010
(51) Int. Cl.: B67B 3/20

(54) **Vorrichtung zum Verschließen von Behältnissen mit berührungsloser Drehmomentenerzeugung**
Device for locking containers with contactless torque generation
Dispositif de fermeture de récipients doté d'une production à couple sans contact

(30) Priorität: 20.02.2009 DE 102009009822
(43) Veröffentlichungstag der Anmeldung: 25.08.2010
(73) Patentinhaber: Krones AG, 93073 Neutraubling (DE)
(72) Erfinder: Knieling, Erwin, D-93073 Neutraubling (DE); Schönfelder, Markus, D-93073 Neutraubling (DE); Dewert, Andreas, D-93073 Neutraubling (DE); Ziegler, Manfred, Dipl.-Ing.(FH), D-93073 Neutraubling (DE); Frankenberger, Günter, D-93073 Neutraubling (DE); Stammel, Volker, D-93073 Neutraubling (DE)
(74) Vertreter: Bittner, Bernhard

(56) Entgegenhaltungen:
- EP-A1- 1 262 445
- US-A1- 2006 260 277
- "Kupplungstechnik", Produktion, Technik und Wirtschaft für die deutsche Industrie; verlag moderne industrie GmbH , 28. Juni 2007 (2007-06-28), XP002692411, Gefunden im Internet: URL:http://www.produktion.de/automatisieru ng/kupplungstechnik/ [gefunden am 2013-02-19]

## Beschreibung

Die vorliegende Erfindung bezieht sich auf eine Vorrichtung zum Verschließen von Behältnissen. Im Stand der Technik sind derartige Vorrichtungen, die im Folgenden auch als Verschliesser bezeichnet werden, seit langem bekannt. Sie dienen dazu, um Behältnisse, beispielsweise Kunststoffbehältnisse, mit Verschlüssen zu verschließen. Dabei werden beispielsweise Schraubverschlüsse auf die Behältnisse aufgeschraubt. Bei vielen Anwendungen ist es hierzu erforderlich, dass die Behältnisse durch einen Sterilraum geführt werden und auf diese Weise in steriler Umgebung verschlossen werden können. Daneben ist die vorliegende Erfindung jedoch auch auf andere Vorrichtungen zum Behandeln von Behältnissen, wie beispielsweise Befüllungsanlagen, Sterilisationseinrichtungen, Reinigungseinheiten, Transporteinrichtungen und dergleichen anwendbar.

Aus der US 7,334,380 B2 ist eine Vorrichtung zum Aufschrauben von Verschlüssen auf Behältnisse bekannt. Dabei weist die Vorrichtung eine drehbare Spindel auf, welche an einem Ende einen Verschlusskopf aufweist und welche an dem anderen Ende mit einem Kupplungselement verbunden ist, wobei dieses Kupplungselement einen magnetischen Kern und eine magnetische Glocke aufweist, welche zusammen wirken.

Dabei ist auch weiterhin eine Verschiebeeinrichtung vorgesehen, welche die magnetische Glocke und den magnetischen Kern gegeneinander verschieben kann zwischen einer Position, in der sie in Eingriff miteinander stehen und einer weiteren Position, in der sie voneinander entkoppelt sind. Auf diese Weise wird durch die Verwendung einer Magnetkupplung ein Einkuppeln bzw. Auskuppeln erreicht. Die EP 0 863 106 A1 beschreibt ebenfalls eine Verschliesservorrichtung. Dabei ist ein Verschlusskopf auf einer drehbaren Spindel angeordnet. An einem oberen Ende dieser Spindel ist eine Vielzahl von Permanentmagneten vorgesehen, die mit jeweils abwechselnden Polen aneinander angeordnet sind. Weiterhin ist ein eine Drehung erzeugendes Mittel vorgesehen, an dem ebenfalls eine Vielzahl von Permanentmagneten angeordnet ist, wobei durch ein Zusammenwirken dieser Drehelemente eine Drehung auch der Spindel bewirkt wird.

Aus der EP 1 186 873 ist eine magnetische Kupplungsvorrichtung zum Übertragen und Messen von Drehmomenten bekannt, welche einen ersten und einen zweiten Körper aufweist, die sich bezüglich einer Achse drehen.

Die DE 203 01 532 beschreibt einen elektromotorischen Antrieb. Dieser Antrieb weist einen sich über einen Sektor des Umfanges erstreckenden Stator und einen mit Permanentmagneten versehenen Rotor auf, wobei an den Umfangsenden des Stators jeweils Auslaufzonen mit dem Rotor zugewandten Auslaufseiten vorgesehen sind, die ausgehend von der zur Rotoraußenseite parallelen gekrümmten Innenseite des Stators im Verlauf Ihrer Umfangserstreckung nach außen einen zunehmenden Abstand zur Außenseite des Rotors aufweisen.

Aus der DE 10 2006 039 090 A1 ist ein Antrieb für Rotationsmaschinen bekannt. Dieser Antrieb weist einen feststehenden und einen drehbaren Maschinenteil auf, wobei an einem Maschinenteil umlaufend ein Kranz mit einer Vielzahl von Magneten vorgesehen ist und an einem anderen Maschinenteil wenigstens ein korrespondierender nur einen Teilsektor des Kranzes überdeckender Stator angeordnet ist.

Die EP 1 262 445 A1 beschreibt eine Vorrichtung gemäß dem Oberbegriff des Anspruchs 1, wobei die Sterilität des Sterilraums durch eine Heißsterilisation des in den Sterilraum eindringenden Schafts erreicht wird.

Bei derartigen Verschließvorrichtungen ist es üblicherweise erforderlich, dass der Verschlusskopf nicht nur gedreht, sondern auch gehoben bzw. abgesenkt wird. Aus diesem Grunde sind im Stand der Technik oftmals Dichtelemente zwischen den außerhalb des Sterilraums liegenden Bereichen und den innerhalb des Sterilraums liegenden Bereichen vorgesehen, wie beispielsweise Wellendichtringe. Daneben ist es auch bekannt, ein sogenanntes Wasserschloss zur Abdichtung zwischen den drehbaren und den stehenden Teilen einzusetzen. Weiterhin ist es bekannt, dass bei Standardabfüllmaschinen die Sterne mittels Zahnrändern an der Sternsäule angetrieben werden, wobei diese Zahnräder wiederum mit dem Hauptantrieb verbunden sind.

Derartige Verbindungen zwischen dem Sterilraum und der Außenumgebung stellen jedoch üblicherweise Schwachstellen derartiger Verschliesser oder auch anderer Anlagen zum Behandeln von Behältnissen dar.

Der vorliegenden Erfindung liegt daher die Aufgabe zu Grunde, eine Vorrichtung zum Verschließen von Behältnissen zur Verfügung zu stellen, welche das Erfordernis an Abdichteinrichtungen zwischen dem Sterilraum und dem außerhalb des Sterilraums liegenden Bereich zumindest reduziert. Dies wird erfindungsgemäß durch eine Vorrichtung nach Anspruch 1 erreicht. Vorteilhafte Ausführungsformen und Weiterbildungen sind Gegenstand der Unteransprüche.

Eine erfindungsgemäße Vorrichtung zum Behandeln von Behältnissen weist ein Gehäuse auf, wobei innerhalb dieses Gehäuses ein Sterilraum ausgebildet ist. Weiterhin weist die Vorrichtung ein Behandlungselement zum Behandeln der Behältnisse auf, das im Inneren des Gehäuses angeordnet ist und das um eine vorgegebene Achse drehbar ist. Weiterhin ist eine Antriebseinrichtung zum Antreiben des Behandlungselements vorgesehen, wobei diese Antriebseinrichtung wenigstens teilweise außerhalb des Sterilraums angeordnet ist.

Erfindungsgemäß weist die Antriebseinrichtung wenigstens ein erstes außerhalb des Sterilraums angeordnetes Antriebselement zur Erzeugung von Drehbewegungen auf und das Behandlungselement ist mit einem zweiten im Inneren des Sterilraums angeordneten und um eine vorgegebene zweite Drehachse drehbar angeordneten zweiten Antriebselement zur Übertragung von Drehmomenten gekoppelt. Dabei wirken das erste Antriebselement und das zweite Antriebselement zur Erzeugung der Drehbewegung des Verschlusskopfes berührungslos zusammen und sind durch wenigstens eine Wandung voneinander getrennt. Weiterhin weisen die Antriebselemente jeweils wenigstens ein magnetisierbares Element auf und bevorzugt ist wenigstens das zweite Antriebselement im Inneren des Sterilraums in Richtung seiner Drehachse gegenüber dem Sterilraum verschiebbar. Zur Erzeugung der Drehbewegung für das mindestens eine Antriebselement können alle Antriebsarten verwendet werden (z. B. elektrische Antriebe wie Synchro-, Asynchro und Servomotoren; magnetische Antriebe wie Elektro- oder Dauermagnete; mechanische Antriebe wie Zahnräder; Pneumatikantriebe usw.) Unter einer Antriebseinrichtung wird der Antrieb in seiner Gesamtheit verstanden, der letztlich den Verschlusskopf zu Drehbewegungen antriebt. Bei dem Verschlusskopf handelt es sich um dasjenige Element, welches letztlich die Verschlüsse auf den Behältnissen anbringt, sie beispielsweise auf diesen Behältnissen aufschraubt. Das benötigte Verschlussaufdrehmoment kann mit alle gängigen Systemen aufgebracht werden (wie z.B. Rasterkupplung, Magnetkupplung, Servomotor, Hysterese-Elemente, usw.).

Diese Antriebseinrichtung weist erfindungsgemäß zwei zusammen wirkende Antriebselemente auf, wobei durch ein Zusammenwirken dieser Antriebselemente letztlich die Drehbewegung des Verschlusskopfes bzw. des Behandlungselements erzeugt wird. Unter einer Kopplung des Verschlusskopfes und des zweiten Antriebselements zur Übertragung von Drehmomenten wird verstanden, dass zumindest zeitweise eine Drehung des zweiten Antriebselements eine insbesondere synchrone Drehung des Verschlusskopfes bzw. des Behandlungselements nach sich zieht.

Bei dem magnetisierbaren Element kann es sich einerseits um Permanentmagnete handeln, andererseits jedoch auch um Elektromagneten oder beispielsweise auch Spulen. Insbesondere werden unter magnetisierbaren Elementen jegliche Elemente verstanden, welche ein magnetisches Feld erzeugen können. Insbesondere ist die Erzeugung von Drehungen des Verschlusskopfes unabhängig von einer Stellung des zweiten Antriebselements gegenüber seiner Drehachse möglich. Bevorzugt findet auch kein Auskoppeln in bestimmten Drehstellungen zwischen den beiden Antriebselementen statt.

Bei einer bevorzugten Ausführungsform ist das erste Antriebselement eine um eine dritte Drehachse drehbare Kopplungseinrichtung bzw. Kupplungseinrichtung und das zweite Antriebselement ist eine mit der ersten Kopplungseinrichtung zusammenwirkende zweite Kopplungseinrichtung bzw. Kupplungseinrichtung, wobei die erste Kopplungseinrichtung und die zweite Kopplungseinrichtung derart beschaffen sind, dass Drehmomente von der ersten Kopplungseinrichtung berührungslos auf die zweite Kopplungseinrichtung übertragbar sind bzw. Drehmomente erzeugbar sind.

Dabei ist hier vorgesehen, dass sich die beiden Kopplungseinrichtungen gemeinsam drehen, dass also eine Drehung des ersten Antriebselements, welches außerhalb des Sterilraums angeordnet ist zu einer synchronen Drehung des zweiten Antriebselements führt. Es wäre jedoch auch möglich, dass es sich bei einem der Antriebselemente um einen Stator handelt und bei dem zweiten Antriebselement um einen drehbar bezüglich diesem Stator angeordneten Rotor. So könnte beispielsweise das erste Antriebselement außerhalb des Sterilraums als Stator ausgeführt sein, der insbesondere eine Vielzahl von Elektromagneten aufweist und bei dem zweiten Antriebselement könnte es sich um ein im Inneren des Sterilraums angeordneten Rotor handeln. Dabei könnte ein derartiger Elektromotor sowohl als Außenläufer als auch als Innenläufermotor aufgebaut sein.

Bevorzugt ist die Vorrichtung eine Vorrichtung zum Verschließen von Behältnissen mit Verschlüssen und das Behandlungselement ein Verschlusskopf, der um seine eigene Achse drehbar ist. Daneben kann jedoch der Verschlusskopf auch um eine zentrale Trägerachse drehbar sein. Bevorzugt weist die Vorrichtung eine Vielzahl von Behandlungselementen bzw. Verschlussköpfen auf. Diese Behandlungselemente sind dabei besonders bevorzugt gleichmäßig in einer Umfangsrichtung bezüglich einer vorgegebenen Drehachse verteilt.

Bei einer weiteren vorteilhaften Ausführungsform ist das erste Antriebselement gegenüber dem zweiten Antriebselement bezüglich wenigstens einer der oben genannten Drehachsen verschiebbar. Vorzugsweise wird also hier das zweite Antriebselement bewegt, wohingegen das erste Antriebselement nicht in Richtung der besagten Achsen verschoben wird. Auch diese Ausführungsform wäre sowohl denkbar, wenn es sich bei dem Antriebselementen um Kopplungseinrichtungen handelt als auch wenn die Antriebselemente eine Stator - Rotor-Kombination darstellen. Vorzugsweise fallen die zweite Drehachse des zweiten Antriebselements und die dritte des ersten Antriebselements zusammen. Bei einer weiteren vorteilhaften Ausführungsform weist das zweite Antriebselement eine Vielzahl von Permanentmagneten auf. Auf diese Weise ist es nicht erforderlich, im Inneren des Sterilraums stromführende Elektromagneten vorzusehen.

Bei einer weiteren vorteilhaften Ausführungsform ist das erste Antriebselement bezüglich der zweiten Drehachse innerhalb des zweiten Antriebelements angeordnet. So ist es möglich, dass im Inneren des Sterilraums das zweite Antriebselement das erste Antriebselemente in Umfangsrichtung vollständig umgibt. Bei einer weiteren vorteilhaften Ausführungsform weist das zweite Antriebselement eine drehbare Hülse auf, in dieser Hülse können dabei die Permanentmagneten beispielsweise eingearbeitet oder an der Rückwand dieser Hülse angeordnet sein.

Bei einer weiteren vorteilhaften Ausführungsform begrenzt die oben genannte Wandung, d.h. insbesondere die Hülse bzw. der hülsenförmige Körper zwischen dem ersten Antriebselement und dem zweiten Antriebselement gleichzeitig den Sterilraum. Dies bedeutet, dass eine Sterilraumgrenze zwischen dem ersten Antriebselement und dem zweiten Antriebselement verläuft.

Bei einer weiteren vorteilhaften Ausführungsform ist wenigstens ein magnetisierbares Element eines der beiden Antriebselemente in der Richtung der zweiten Drehachse länger als wenigstens ein magnetisierbares Element des anderen Antriebselements. Auf diese Weise wird ermöglicht, dass die beiden Antriebselemente gegeneinander in Richtung ihrer Drehachsen bewegt werden ohne dass hierbei die Drehkopplung zwischen den beiden Antriebselementen aufgehoben wird.

Bei einer weiteren vorteilhaften Ausführungsform sind die magnetischen Elemente des ersten Antriebselements in Richtung der zweiten Drehachse länger als die magnetischen Elemente des zweiten Antriebselements. Diese Ausführungsform erlaubt eine besonders bequeme Verschiebung des zweiten Antriebselements bzw. der zweiten Kopplungseinrichtung über dem ersten Antriebselement. Es wäre jedoch auch bei dieser Ausführung denkbar, dass die beiden Antriebselemente als Stator und Rotor ausgeführt sind.

Bei einer weiteren vorteilhaften Ausführungsform ist das zweite Antriebselement gegenüber dem ersten Antriebselement um eine vorgegebene Strecke verschiebbar und die magnetisierbaren Elemente wenigstens einer Kopplungseinrichtung bzw. eines Antriebselements sind wenigstens so lange wie diese Strecke. Auf diese Weise wird ein Verschieben der Antriebselemente gegeneinander um die Strecke S erlaubt, ohne das hierdurch die magnetische Kopplung zwischen den Antriebselementen aufgehoben wird.

Vorzugsweise sind die magnetischen Elemente wenigstens teilweise Permanentmagneten. Es wäre jedoch auch möglich, dass sämtliche magnetischen Elemente als Permanentmagneten ausgeführt sind, insbesondere, wenn es sich bei den Antriebseinrichtungen um Kopplungseinrichtungen handelt. Daneben könnten jedoch auch wenigstens teilweise Elektromagneten als magnetische Elemente eingesetzt werden. Der Vorteil dieser Ausführungsform läge darin, dass die Magnetkraft dieser Elektromagneten gesteuert werden könnte und damit auch die zu übertragende magnetische Kraft und damit auch das auf den Verschlusskopf aufbringbare Drehmoment.

So könnte beispielsweise eine Steuereinrichtung vorgesehen sein, welche gezielt derartige Elektromagneten ansteuert um einen gezielten Drehverlauf zum Verschließen der Behältnisse zu erreichen. Weiterhin wäre es auch möglich, dass der Abstand zwischen den Magneten der beiden Antriebselemente veränderbar bzw. sogar gesteuert veränderbar ist. Auch durch diese Veränderung des Abstandes können letztlich die auf den Behältnissverschluss wirkenden Drehmomente variiert werden.

Bei einer weiteren vorteilhaften Ausführungsform ist im Innern des Sterilraums eine Hubkurve angeordnet, welche eine Bewegung des Verschlusskopfes in der Richtung seiner Drehachse bewirkt. Es wäre jedoch auch möglich, dass eine derartige Hubkurve außerhalb des Sterilraums angeordnet ist und beispielsweise beide Antriebselemente synchron in Richtung der besagten Drehachse bewegt.

Bei einer weiteren vorteilhaften Ausführungsform ist der Träger in seiner Gesamtheit um eine Trägerachse drehbar und der Träger ist mit dem zweiten Antriebselement gekoppelt. Bei dieser Ausführungsform wird der gesamte Träger, an dem auch eine Vielzahl von Behandlungselementen angeordnet sein kann um eine zentrale Trägerachse gedreht. Damit wird jedoch auch das Behandlungselement um die besagte Trägerachse gedreht.

Bei der Behandlungseinrichtung kann es sich nicht nur um den oben erwähnten Verschlusskopf handeln, sondern auch um andere Behandlungseinheiten wie beispielsweise Fülleinrichtungen oder auch Transporteinrichtungen, Greifklammern und dergleichen. Damit wird unter einer Behandlungseinrichtung auch jegliche Einrichtung verstanden, welche Behältnisse behandelt bzw. auf diese einwirkt. Bei der Vorrichtung kann es sich bei dieser Ausführungsform beispielsweise auch um eine Transporteinrichtung, wie ein Sternrad, handeln, bei dem ein drehbarer Träger durch eine magnetische Kopplung oder einen Motor berührungslos angetrieben wird. Daneben kann es sich jedoch bei der Vorrichtung in dieser Ausführungsform auch um eine Fülleinrichtung handeln.

Sämtlichen der oben beschriebenen Gestaltungen liegt jedoch das gemeinsame Konzept zu Grunde, dass sich jeweils eine Trennung zwischen dem sterilen Raum und der Umgebung ohne einen hohen Prozesstechnikaufwand realisieren lässt. In jedem Falle wird eine berührungslose Kraftübertragung in den Reinraum vorgesehen. Dagegen befinden sich im Stand der Technik, wie oben erwähnt, die notwendigen Bauteile im Reinraum und müssen daher mit gereinigt werden und aus diesem Grunde müssen im Stand der Technik die elektronischen Bauteile in einer entsprechenden Schutzklasse ausgeführt werden, was wiederum zu hohen Bauteilkosten führt.

Weitere Vorteile und Ausführungsformen ergeben sich aus den beigefügten Zeichnungen:

Darin zeigen:
- Figur 1: Eine schematische Gesamtdarstellung einer erfindungsgemäßen Vorrichtung in einer ersten Ausführungsform;
- Figur 2: Eine Detaildarstellung der Vorrichtung aus Figur 1;
- Figur 3: Eine Detaildarstellung der Vorrichtung aus Figur 1;
- Figur 4: Eine weitere Detaildarstellung der Vorrichtung aus Figur 1;
- Figur 5: Eine erfindungsgemäße Vorrichtung in einer weiteren Ausführungsform;
- Figur 6: Eine Detaildarstellung der Vorrichtung aus Figur 5;
- Fig. 7: eine weitere Ausführungsform einer erfindungsgemäßen Vorrichtung; und
- Fig. 8: eine Detaildarstellung der Vorrichtung aus Fig. 7

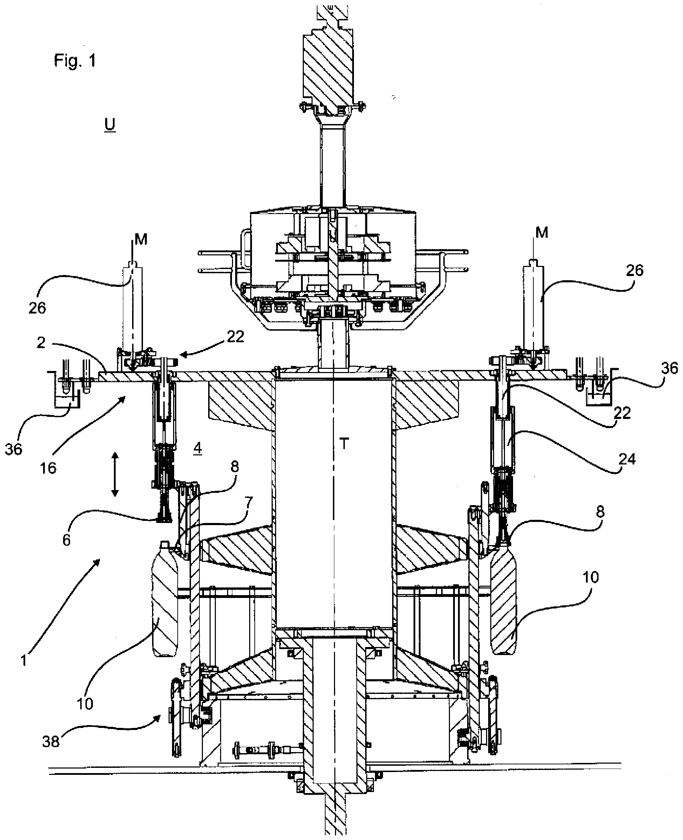

Figur 1 zeigt eine erfindungsgemäße Vorrichtung 1 in einer ersten Ausführungsform. Bei der in Figur 1 gezeigten Vorrichtung handelt es sich um einen Verschliesser, der Behältnisse 10 im Inneren eines Reinraums 4 mit Verschlüssen verschließt. Zu diesem Zweck weist die Vorrichtung einen Verschlusskopf 6 auf, der (nicht gezeigte) Verschlüsse auf die Behältnisse 10 aufschraubt. Dabei ist dieser Verschlusskopf 6 einerseits drehbar angeordnet und andererseits über einen Träger 8 entlang des Pfeils P1 heb- und senkbar. Um diese Heb- und Senkbarkeit zu erreichen ist im Inneren des Sterilraums 4 eine Kurve 38 vorgesehen. Der Verschlusskopf 6 ist dabei um eine erste Drehachse X drehbar.

Der Sterilraum bzw. Reinraum 4 wird durch ein Gehäuse 2, welches nur teilweise dargestellt ist, gegenüber einer Umgebung U abgegrenzt. Außerhalb des Gehäuses 2 bzw. des Sterilraums 4 ist ein Motor, insbesondere ein Elektromotor vorgesehen, der die Drehbewegung des Verschlusskopfes 6 erzeugt. Das Bezugszeichen 36 bezieht sich auf ein im Stand der Technik an sich bekanntes Wasserschloss zur Abdichtung des Sterilraumes 4. Genauer gesagt ist der Elektromotor 26 und auch der Verschlusskopf um eine zentrale Trägerachse T drehbar und, wie in Figur 1 gezeigt, sind mehrere derartiger Verschlussköpfe im Inneren des Reinraums 4 angeordnet. Die Behältnisse 10 werden hier auf einer kreisförmigen Bahn um die Achse T befördert, wobei sie jeweils mit Greifeinrichtungen 7 gehalten werden. Es wird darauf hingewiesen, dass auch die Greifeinrichtungen 7 Behandlungselemente zum Behandeln der Behältnisse darstellen können.

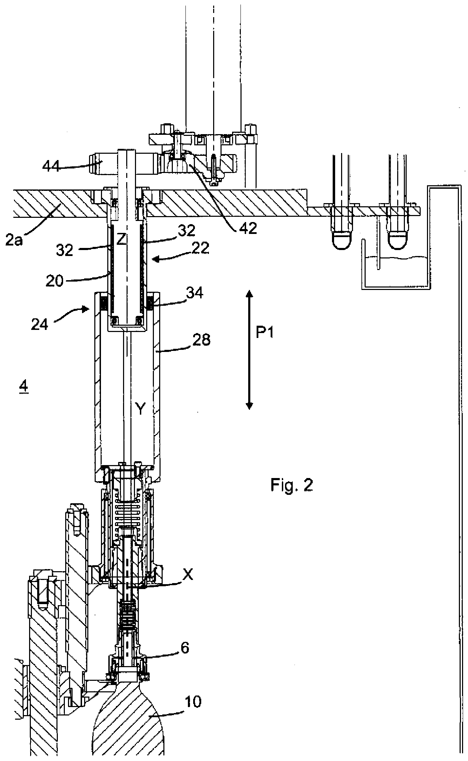

Figur 2 zeigt eine Detaildarstellung der in Figur 1 gezeigten Vorrichtung, genauer gesagt der rechten Seite der in Figur 1 gezeigten Vorrichtung. Man erkennt hier, dass außerhalb des Reinraums 4 ein angetriebenes Zahnrad 44 vorgesehen ist, welches von einem antreibenden Zahnrad 42, welche an dem Motor 26 angeordnet ist, angetrieben wird. Auf diese Weise wird auch ein erstes Antriebselement 22 angetrieben, welches zwar geometrisch innerhalb des Gehäuses 2 angeordnet ist, jedoch, wie unten genauer gezeigt wird außerhalb des Sterilraums 4. Genauer gesagt ist dieses erste Antriebselement 22 zwischen der Gehäusewandung 2a und dem Verschlusskopf 6 angeordnet.

Dieses erste Antriebselement 22 weist eine Vielzahl von Permanentmagneten 32 auf, welche um eine dritte Drehachse Z drehbar sind und auch drehbar gegenüber einem ersten Hülsenartigen Körper 20 angeordnet. Dieser hülsenartige Körper 20 weist weiterhin auch eine Wandung auf bzw. stellt die Wandung dar, welche das erste Antriebselement von einem zweiten Antriebselement 24 trennt. Genauer ist der hülsenartige Körper einseitig (in Richtung des Sterilraums 4) geschlossen ausgeführt.

Dieses zweite Antriebselement 24 weist ebenfalls eine Vielzahl von Permanentmagneten 34, die in Umfangsrichtung angeordnet sind auf. Dabei sind bevorzugt sowohl die Permanentmagneten 32 als auch die Permanentmagneten 34 jeweils abwechselnd hinsichtlich ihrer Polarität in Figur 2 in der Umfangsrichtung angeordnet. Die zweiten Permanentmagneten 34 sind an einer Hülse 28 angeordnet. Eine Drehung dieser Hülse 28 ist damit an eine Drehung des ersten Antriebselements 22 über die magnetischen Kräfte zwischen den Magneten 32 und 34 gekoppelt. Der Verschlusskopf 6 wiederum ist hinsichtlich seiner Drehung mit dem zweiten Antriebselement 24 gekoppelt. Die Hülse 28 bzw. das zweite Antriebselement 24 ist um eine zweite Drehachse Y drehbar. Bei der vorliegenden Ausführungsform fallen die drei Drehachsen X, Y, und Z geometrisch zusammen. Es wäre jedoch auch möglich, dass die Drehachsen nicht zusammenfallen und beispielsweise parallel zueinander sind.

Man erkennt weiterhin, dass sich die ersten magnetischen Elemente 32 in Richtung des Pfeils P bzw. auch in der Richtung der Drehachsen Z und Y länger erstrecken als die zweiten magnetischen Elemente 34. Auf diese Weise kann das zweite Antriebselement 24 gegenüber dem ersten Antriebselement 22 in der Pfeilrichtung P1 verschoben werden, wobei stets eine Drehmomentkopplung zwischen dem ersten Antriebselement 22 und dem zweiten Antriebselement 24 erhalten bleibt. Bei der in Figur 2 gezeigten Darstellung befindet sich das zweite Antriebselement in einer untersten Position, d. h. insbesondere derjenigen Position, in der der Verschluss auf das Behältnis 10 aufgeschraubt werden kann.

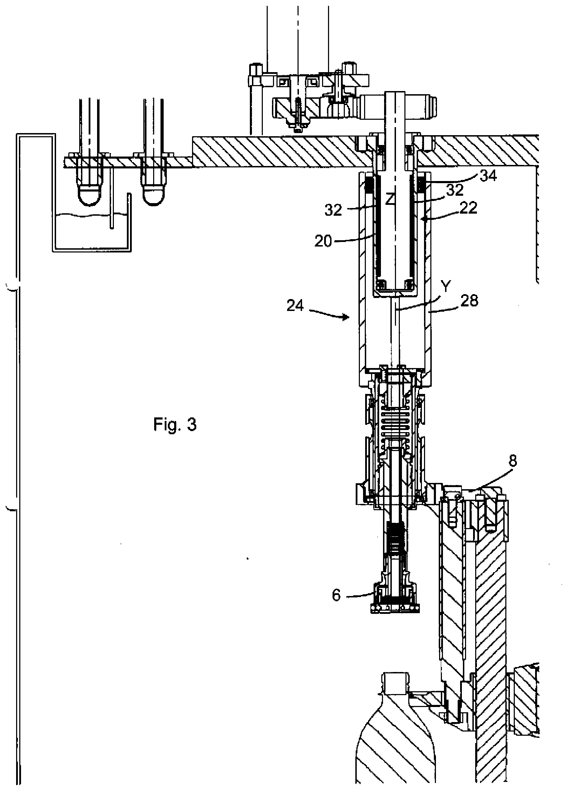

Fig. 3 zeigt ein weiteres Detail der in Figur 1 gezeigten Vorrichtung. In diesem Zustand ist der Verschlusskopf 6 und damit auch das zweite Antriebselement 24 in einem höchstmöglichen Zustand und man erkennt, dass auch hier eine Drehmomentkopplung zwischen den Magneten 32 und 34 möglich ist. Auch die Hülse 28 ist drehbar bezüglich der Achse Z gelagert. Auf diese Weise wird eine rein mechanische berührungslose Trennung der Antriebskomponenten durch Kraftübertragung mittels Magneten erreicht. Der hier unten geschlossene hülsenförmige Körper 20 ragt in den Reinraum hinein. Das Antriebsritzel beziehungsweise die Welle werden in diesem hülsenförmigen Körper 20 drehbar montiert. Damit ragt hier auch das erste Antriebselement 22 zumindest teilweise geometrisch in den Sterilraum 4hinein, ist jedoch vollständig außerhalb des Sterilraums 4 angeordnet.

In dem Sterilraum 4 wird auf einer Hubvorrichtung bzw. dem Träger 8 der hülsenförmige Körper 28 mit dem Magnetring 34 drehbar montiert. Diese wird über den oben erwähnten hülsenförmigen Körper 20 geschoben. Die Hubbewegungen werden, wie oben erwähnt, durch eine Hubkurve über das Hubelement übertragen damit erfolgt eine Rotation und damit auch eine Drehmomentübertragung durch die beschriebene Magnetkupplung. Es wäre jedoch dabei auch möglich, die Hubbewegung im unsterilen Raum d.h. außerhalb des Sterilraums in dem Bereich U zu erzeugen und diese Bewegungen ebenfalls mittels einer Magnetkupplung in den Sterilraum 4 zu übertragen.

Auf diese Weise ist es möglich, sämtliche Bauteile im Reinraum je nach Anforderung zu reinigen. Es liegt lediglich noch eine Durchführung in den Sterilraum 4 vor, die statisch abgedichtet werden kann und damit nicht gesondert hygienetechnisch behandelt werden muss.

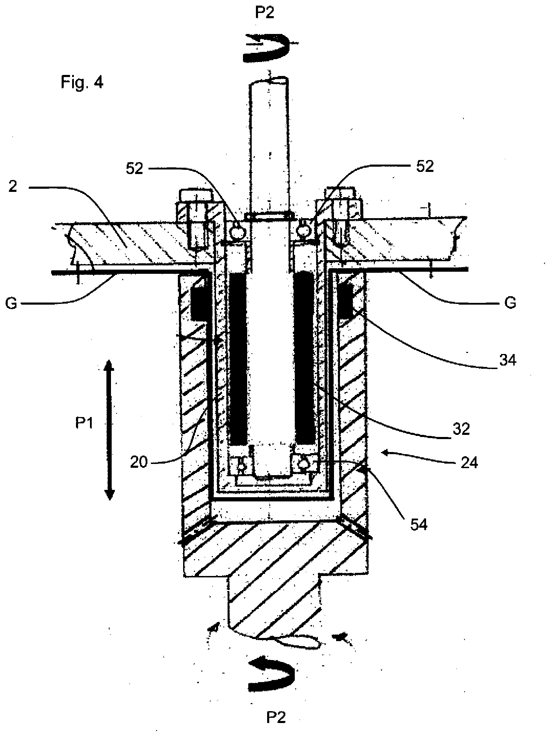

Figur 4 zeigt eine Detaildarstellung der beiden Antriebselemente 22 und 24. Man erkennt, dass das erste Antriebselement mit den ersten magnetischen Elementen 32 mittels Lagern 52 und 54 drehbar bezüglich des hülsenförmigen Körpers 20 gelagert ist. Der hülsenförmige Körper 20 selbst ist innerhalb des Sterilraums 4 und vollständig abgeschlossen und ragt in dieser Form in den Sterilraum 4 hinein. Gleichzeitig wird durch diesen hülsenförmigen Körper 20 die Sterilraumgrenze G zwischen dem Sterilraum 4 und der Umgebung U gebildet. Die zweite Hülse 28 nimmt, wie oben erwähnt, den hülsenförmigen Körper 20 vollständig auf. Diese Hülse 28 ist dabei, wie durch die Pfeile P2 angedeutet, drehbar gelagert.

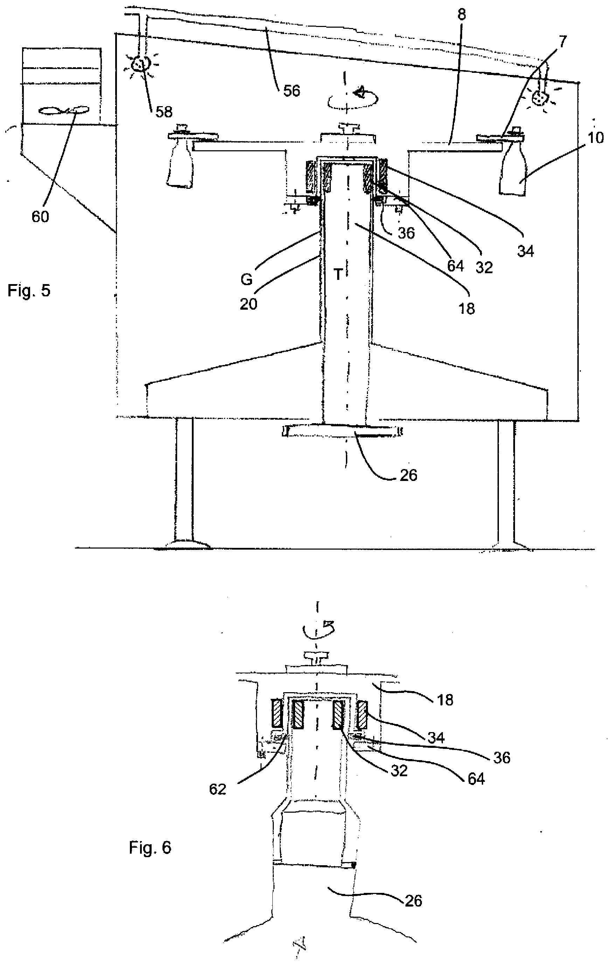

Figur 5 bezieht sich auf eine weitere erfindungsgemäße Vorrichtung. In diesem Falle handelt es sich bei dem Behandlungselement 7 um eine Greifklammer 7, welche das Behältnis 10 trägt. Diese Greifklammer ist auch hier an einen Träger 8 angeordnet und damit in ihrer Gesamtheit drehbar um eine Trägerachse T. Bei der in Figur 5 gezeigten Ausführungsform wird die Drehung des Trägers 8 um die Trägerachse T durch eine wie in den oben genannten Figuren beschriebene Magnetkupplung erzeugt.

Daher ist hier das Behandlungselement 7 ebenfalls über den Träger 8 mit dem zweiten Antriebselement gekoppelt. Das zweite Antriebselement 24 erzeugt eine Drehung des Trägers um eine Trägerachse T und damit auch des Behandlungselements 7 bzw. einer Vielzahl von Behandlungselementen 7, die an diesem Träger 8 angeordnet sind. Bei dieser Ausführungsform ist das zweite Antriebselement 7 bevorzugt nicht in der Richtung der Drehachse T beweglich angeordnet. Bei der in Fig. 5 gezeigten Ausführungsform der Erfindung handelt es sich insbesondere um ein Transportrad bzw. einen Transportstern.

Genauer gesagt ist hier ein Wellenkörper 18 vorgesehen, an dem wiederum die ersten magnetischen Elemente 32 angeordnet sind. Das Bezugszeichen 20 bezieht sich auch hier auf eine Wandung zwischen den beiden Antriebselementen 22 und 24 und genauer gesagt auch hier wieder auf einen hülsenförmigen Körper, der in den Sterilraum 4 hinein ragt. Dieser hülsenförmige Körper 20 ist dabei stationär angeordnet und der Träger 8 ist in seiner Gesamtheit drehbar gegenüber diesem hülsenförmigen Körper 20 und auch die Welle 18 ist drehbar gegenüber diesem hülsenförmigen Körper. Die Sterilraumgrenze G wird, wie auch bei den obigen Ausführungsformen, wieder durch diesen hülsenförmigen Körper 20 bestimmt.

Das Bezugszeichen 56 bezieht sich auf eine Leitung für Schaumreinigung und das Bezugszeichen 58 auf entsprechende Sprühköpfe zur Reinigung. Über ein Lager 36 wird der Träger drehbar gegenüber dem hülsenförmigen Körper 20 gelagert. Das Lager kann sich hier gegen den hülsenförmigen Körper 20 abstützen. Das Bezugszeichen 26 bezieht sich auf einen (hier nicht genauer dargestellten) Motor zur Erzeugung der Drehbewegung der Welle 18 und damit auch des Trägers 8. Das Bezugszeichen 60 bezieht sich auf eine Filterventilatoreinheit zum Filtern der Luft in dem Sterilraum 4. Das Bezugszeichen 64 kennzeichnet eine Verankerung des Trägers 8 im Inneren des Sterilraums 4. Diese Verankerung dient, um den Träger 8 gegenüber dem Lager 36 zu stabilisieren.

Figur 6 zeigt eine detailiertere Darstellung der Antriebseinheit aus Figur 5. Man erkennt auch hier wieder die magnetischen Elemente 32 und 34, wobei darauf hingewiesen wird, dass bei dieser Ausführungsform diese magnetischen Elemente und damit auch die Antriebselemente 22 und 24 nicht bezüglich einander in Richtung der Drehachse T bewegbar sind. Eine derartige Verschiebung ist bei dieser Ausführungsform nicht vorgesehen. Das in den Figuren 5 und 6 gezeigte Prinzip kann auf übliche Transporteinrichtungen wie Transportsterne angeordnet werden, wobei die Behältnisse hierbei stets in einem Reinraum transportiert werden. Es wird darauf hingewiesen, dass die in den Figuren 5 und 6 einerseits und 6 bis 7 andererseits gezeigten Ausführungsformen auch miteinander kombiniert werden können. Es wäre also möglich sowohl die Drehung der Greifelemente 7 um die zentrale Trägerachse T als auch die Drehung der Verschlussköpfe 6 um ihre eigene Achse jeweils durch Magnethubkopplungen zu bewerkstelligen.

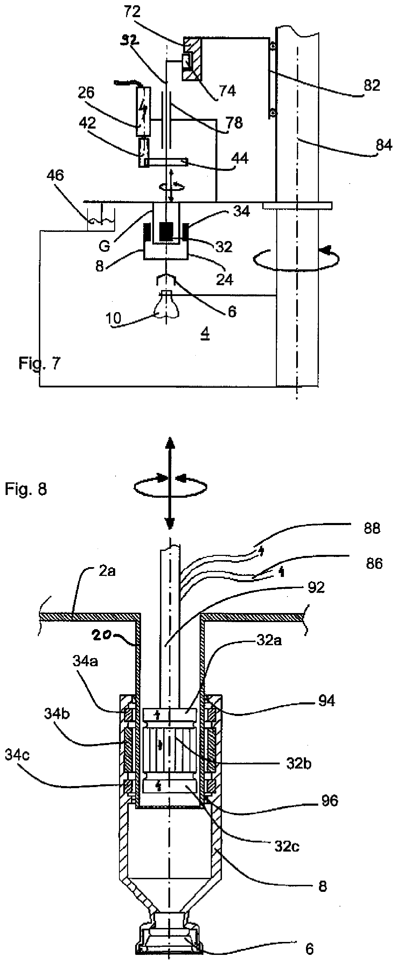

Fig. 7 zeigt eine weitere Ausführungsform der vorliegenden Erfindung. Auch hier ist der Verschlusskopf 6 an einem Träger 8 angeordnet. Im Gegensatz zu der obigen Ausführungsform ist jedoch hier der Träger 8 selbst drehbeweglich und auch höhenverschiebbar in dem Reinraum 4 angeordnet.

Bei dieser Ausführungsform ist der Träger 8 auch das zweite Antriebselement 24. Die magnetisierbaren Elemente 34 sind hier ebenfalls an dem zweiten Antriebselement 24 gehalten. Bei der in Fig. 7 gezeigten Ausführungsform dienen die magnetisierbaren Elemente 32 nicht nur zur Übertragung einer Drehbewegung sondern auch zur Übertragung einer Hubbewegung. Die magnetisierbaren Elemente 32 sind hier an einer Antriebsstange 92 (vgl. Fig. 8) angeordnet. Der Antriebsmotor 26 treibt über ein antreibendes Zahnrad 42 ein angetriebenes Zahnrad 44 an und dieses ist wiederum drehfest mit der Antriebsstange 92 verbunden.

Die Antriebsstange 92 ist in einer Führungseinrichtung 78 geführt und weist ein Stellelement 74 auf, welches mit einer Führungskurve 72 zusammenwirkt. Diese Führungskurve 72 ist über einen Schlitten 82 höhenverschiebbar an dem Wellenkörper 84 angeordnet, wobei der Wellenkörper in dem Schlitten drehbeweglich gelagert ist. Alternativ kannn die Höhenverschiebbarkeit der Führungskurve auch durch einen elektrischen Antrieb vorgenommen werden, z.B. einen Linearmotor oder einen Servomotor. Das Bezugszeichen 46 kennzeichnet ein sog. Wasserschloss, welches zur Abdichtung des Sterilraums 4 gegenüber der Umgebung dient.

Fig. 8 zeigt eine Detaildarstellung der in Fig. 7 gezeigten Vorrichtung. Man erkennt hier insbesondere, dass sich das erste magnetisierbare Element 32 aus drei jeweils unabhängig voneinander magnetisierbaren Abschnitten 32a - 32c und auch das zweite magnetisierbare Element 34 aus drei jeweils unabhängig voneinander magnetisierbaren Abschnitten 34a - 34c zusammensetzt.

Im einzelnen bezeichnen die Bezugszeichen 32a und 34a jeweils obere Hubmagneten und die Bezugszeichen 32c und 34c jeweils untere Hubmagneten, wobei sich die Bezugszeichen 32a und 32c jeweils auf die inneren Hubmagneten und die Bezugszeichen 34a und 34c jeweils auf die äußeren Hubmagneten beziehen. Die oberen und unteren Hubmagneten wirken jeweils bei der Hubbewegung des Verschließkopfes zusammen und bewirken, dass der Träger 8 der Bewegung des in seiner Gesamtheit mit 32 bezeichneten magnetisierbaren Elements folgt.

Die Bezugszeichen 32b und 34b bezeichnen die inneren und äußeren Drehmagneten, welche für die Erzeugung der Drehbewegung des Trägers 8 und damit auch des Verschlusskopfes 6 zusammenwirken. Bei dieser Ausführungsform wird der Verschlusskopf nur über die Magnetkraft gehalten. Es ist auch denkbar, dass die magnetische Kopplung als einstellbare Überlastkupplung ausgeführt ist. Um mechanischen Schaden zu vermeiden kann das weitere Antriebselement im Störfall in Längsrichtung über die definierte Auslenkung nach oben hinaus bewegt werden, bzw. auskuppeln. Solche Störfälle treten gehäuft auf, wenn beim Absenken des Verschließkopfes während des Verschließvorgangs der Kopf und damit das zweite Antriebselement im Hub blockiert werden, obwohl sich das erste Hubelement weiterhin abwärts bewegt.

Bei einer bevorzugten Ausführungsform ist die Kupplung so gestaltet, dass das zweite Antriebselement (24) nach Ende der von außen verursachten Störung selbstständig wieder in die Ausgangs- bzw. Kopplungsstellung zurückkehrt.

Bei der Verwendung eines schaltbaren Haltemagneten für die Hubbewegung kann zum Wechseln des Verschließkopfs die Magnetkraft vollständig abgeschaltet werden und das zweite Antriebselement incl. Verschließkopf könnte nach unten abgezogen werden/fällt nach unten.

Bei Verwendung geeigneter Sensoren oder dem Einsatz von Elektromagneten kann die Höhen-Abweichung des zweite Antriebselements (24) vom ersten Antriebslelement erkannt und gegebenenfalls als Fehler im Verschließprozess erkannt und ausgewertet werden.

Bei den magnetisierbaren Elementen 32a - 32c handelt es sich hier jeweils um Elektromagnete, welche jeweils über Kabelzuführungen 86 und 88 separat mit Strom versorgt werden. Durch entsprechende Bestromung der Magneten 32b, welche für die Drehung verantwortlich sind, kann auch das übertragbare Drehmoment eingestellt bzw. variiert werden. Durch eine entsprechende Bestromung der Magneten 32a und 32c über die Kabelzuführung 88 können die übertragbaren Hubkräfte variiert werden, so dass entsprechend auch die Druckkräfte während des Verschließvorganges der Kombination von Behältnissen und Behältnisverschlüssen spezifisch eingestellt werden können. Weiterhin ist die Kupplungskraft der Art einstellbar, dass bei einem Verschließfehler wie z.B. einem Schrägsitzer, zwar das erste Antriebselement 22 weiter abgesenkt werden kann, wobei das zweite Antriebselement 24 jedoch in der blockierten Höhenposition stehen bleiben kann. Dadurch wird eine mechanische Zerstörung der Bauteile verhindert. Dadurch besteht in dieser Ausführungsform keine Notwendigkeit für einen abfedernden Verschlusskopf, das heißt, im Verschlusskopf 6 sind keine in Richtung der Drehachse X federnden Federelemente eingebaut, die schwierig zu reinigen sind und ein gewisses hygienisches Risiko mit sich bringen. Die jeweiligen äußeren Magneten 34a, 34b und 34c sind bevorzugt jeweils als Permanentmagneten ausgeführt. Theoretisch findet bei dieser Ausführung kein Verschieben der Magnete zueinander statt. Die vom ersten Antriebselement angefahrene Position wird 1:1 vom zweiten Antriebselement (24) an den Verschließkopf weitergegeben.

Durch eine geeignete Wahl der magnetischen Kraft (bevorzugt elektrisch einstellbar) ist es zusätzlich möglich auf den Verschließkopf während der Verschließphase einen definierten Kopfdruck auszuüben. Das erste Antriebselement fährt dabei etwas weiter nach unten (gegen magnetische Vorspannung), als es das zweite Antriebselement bzw. der Verschließkopf zulässt. Dadurch werden die beiden Antriebselemente zueinander verschoben und die Einheit fungiert als magnetische Feder).

Die Bezugszeichen 94 und 96 kennzeichnen Hilfsführungen, um den Träger 8 an dem Stützkörper 20, der gleichzeitig hier die Sterilraumgrenze G bildet, zu führen. Dabei können die Hilfsführungen auch dazu dienen, um zu verhindern, dass der Träger 8 (beispielsweise bei Stromausfällen), von dem Stützkörper 20 herabfällt. Dazu sind am unteren Ende des Stützkörpers (nicht gezeigte) Vorsprünge angebracht. Die Hilfsführungen und/oder Vorsprünge sind so ausgebildet, dass der Träger 8 durch auf einfache Weise lösbare Fixierelemente (nicht gezeigt) in weitgehend unterster Höhenposition axial fixiert ist. Durch das Lösen der Fixierelemente oder der (nicht gezeigten) Vorsprünge sowie eine Spannungsfreischaltung der Magnete 32 und/oder 34 ist ein Abziehen der Verschlussköpfe 6 mit den Trägern 8 von den entsprechenden Stützkörpern 20 und somit ein Ausbau und Wechsel der Verschlussköpfe 6 mit dem Träger 8 möglich. Diese Hilfsführungen erlauben jedoch sowohl eine Drehung des Trägers 8 bezüglich des Stützkörpers 20 als auch eine Hubbewegung des Trägers 8 bezüglich des Stützkörpers 20.

### Bezugszeichenliste

- 1: Vorrichtung
- 2: Gehäuse
- 2a: Gehäusewandung
- 4: Sterilraum, Reinraum
- 6: Behandlungselement, Verschlusskopf
- 7: Behandlungselement, Greifeinrichtung
- 8: Träger
- 10: Behältnis
- 18: Wellenkörper
- 20: hülsenartiger Körper, Wandung, Stützkörper
- 22: erstes Antriebselement
- 24: zweites Antriebselement
- 26: Motor
- 28: Hülse
- 32: magnetisierbare Elemente
- 32a: magnetisierbarer Abschnitt, innerer oberer Hubmagnet
- 32b: magnetisierbarer Abschnitt, innerer Drehmagnet
- 32c: magnetisierbarer Abschnitt, innerer unterer Hubmagnet
- 34a: magnetisierbarer Abschnitt, äußerer oberer Hubmagnet
- 34b: magnetisierbarer Abschnitt, äußerer Drehmagnet
- 34c: magnetisierbarer Abschnitt, äußerer unterer Hubmagnet
- 34: magnetisierbare Elemente
- 36: Wasserschloss
- 38: Kurve
- 42: antreibendes Zahnrad
- 44: angetriebenes Zahnrad
- 46: Wasserschloss
- 52, 54: Lager
- 56: Leitung für Schaumreinigung
- 58: Sprühkopf
- 60: Filterventilatoreinheit
- 72: Führungskurve
- 74: Stellelement
- 76: Stützkörper
- 78: Führungseinrichtung
- 82: Schlitten
- 92: Antriebsstange

- X: erste Drehachse
- Y: zweite Drehachse
- Z: dritte Drehachse
- T: Trägerachse
- G: Sterilraumgrenze
- P1, P2: Pfeile
- U: Umgebung, Bereich außerhalb des Sterilraums

## Patentansprüche

1. Vorrichtung (1) zum Behandeln von Behältnissen (10), mit einem Gehäuse (2), innerhalb dessen ein Sterilraum (4) ausgebildet ist, mit einem Behandlungselement (6,7) zum Behandeln der Behältnisse, welches Behandlungselement (6,7) im Inneren des Gehäuses (2) angeordnet ist und um eine vorgegebene Achse (X,T) drehbar ist, wobei das Behandlungselement an einem im Inneren des Gehäuses (2) vorgesehenen Träger (8) angeordnet ist mit einer Antriebseinrichtung zum Antreiben des Behandlungselements (6), wobei diese Antriebseinrichtung wenigstens teilweise außerhalb des Sterilraums (4) angeordnet ist,
**dadurch gekennzeichnet, dass**
die Antriebseinrichtung wenigstens ein erstes außerhalb des Sterilraums (4) angeordnetes Antriebselement (22) zur Erzeugung von Drehbewegungen aufweist und das Behandlungselement (6) mit einem zweiten im Inneren des Sterilraums (4) angeordneten und um eine vorgegebene zweite Drehachse (Y) drehbaren zweiten Antriebselement (24) zur Übertragung von Drehmomenten gekoppelt ist, wobei das erste Antriebselement (22) und das zweite Antriebselement (24) zur Erzeugung der Drehbewegung des Behandlungselements berührungslos zusammenwirken und durch wenigstens eine Wandung (20) voneinander getrennt sind und wobei die Antriebselemente (22, 24) jeweils wenigstens ein magnetisierbares Element (32, 34) aufweisen und bevorzugt wenigstens das zweite Antriebselement (24) in Richtung seiner Drehachse (Y) gegenüber dem Sterilraum (4) verschiebbar ist, wobei das magnetisierbare Element Permanentmagnete, Elektromagnete, Spulen oder andere Elemente, die geeignet sind, ein magnetisches Feld zu erzeugen, umfasst.

2. Vorrichtung nach Anspruch 1,
**dadurch gekennzeichnet, dass**
das erste Antriebselement (22) eine um eine dritte Drehachse (Z) drehbare Kupplungseinrichtung (22) ist und das zweite Antriebselement (24) eine mit der ersten Kupplungseinrichtung (22) zusammenwirkende zweite Kupplungseinrichtung (24) ist und die erste Kupplungseinrichtung (22) und die zweite Kupplungseinrichtung (24) derart beschaffen sind, dass Drehmomente von der ersten Kupplungseinrichtung (22) berührungslos auf die zweite Kupplungseinrichtung (24) übertragbar sind

3. Vorrichtung (1) nach wenigstens einem der vorangegangenen Ansprüche,
**dadurch gekennzeichnet, dass**
die Vorrichtung (1) eine Vorrichtung zum Verschließen von Behältnissen (10) mit Verschlüssen ist und das Behandlungselement (6) ein Verschlusskopf (6) ist, der um seine eigene Achse (Z) drehbar ist.

4. Vorrichtung nach wenigstens einem der vorangegangenen Ansprüche,
**dadurch gekennzeichnet, dass**
das erste Antriebselement (22) gegenüber dem zweiten Antriebselement (24) bezüglich wenigstens einer der Drehachsen (Y, Z) verschiebbar ist.

5. Vorrichtung (1) nach Anspruch 3,
**dadurch gekennzeichnet, dass**
das zweite Antriebselement (24) eine Vielzahl von Permanentmagneten (34) aufweist.

6. Vorrichtung (1) nach wenigstens einem der vorangegangenen Ansprüche,
**dadurch gekennzeichnet, dass**
das erste Antriebselement (22) bezüglich der zweiten Drehachse (Y) innerhalb des zweiten Antriebselements (24) angeordnet ist.

7. Vorrichtung (1) nach Anspruch 6,
**dadurch gekennzeichnet, dass**
die magnetischen Elemente (32) des ersten Antriebselements (22) in Richtung der zweiten Drehachse (Y) länger sind als die magnetischen Elemente (34) des zweiten Antriebselements (24)

8. Vorrichtung (1) nach wenigstens einem der vorangegangenen Ansprüche,
**dadurch gekennzeichnet, dass**
das zweite Antriebselement (24) gegenüber dem ersten Antriebselement (22) um eine vorgegebene Strecke (S) verschiebbar ist und magnetisierbaren Elemente wenigstens einer Kupplungseinrichtung (22, 24) wenigstens so lang sind wie diese Strecke (S).

9. Vorrichtung (1) nach wenigstens einem der vorangegangenen Ansprüche,
**dadurch gekennzeichnet, dass**
der Träger um eine Trägerachse (T) drehbar ist und der Träger mit dem zweiten Antriebselement (24) gekoppelt ist.

## Claims

1. Apparatus (1) for treating containers (10), comprising a housing (2), inside which a sterile chamber (4) is formed, comprising a treatment element (6, 7) for treating the containers, which treatment element (6, 7) is arranged inside the housing (2) and is rotatable about a predefined axis (X, T), wherein the treatment element is arranged on a carrier (8) provided inside the housing (2), and comprising a drive device for driving the treatment element (6), wherein this drive device is arranged at least partially outside the sterile chamber (4),
**characterised in that**
the drive device comprises at least a first drive element (22) arranged outside the sterile chamber (4) for generating rotational movements, and the treatment element (6) is coupled to a second drive element (24) for transmitting torques, said second drive element being arranged inside the sterile chamber (4) and being rotatable about a predefined second axis of rotation (Y), wherein the first drive element (22) and the second drive element (24) cooperate in a contactless manner in order to generate the rotational movement of the treatment element and are separated from one another by at least one wall (20), and wherein the drive elements (22, 24) in each case have at least one magnetisable element (32, 34) and preferably at least the second drive element (24) is displaceable in the direction of its axis of rotation (Y) relative to the sterile chamber (4), wherein the magnetisable element comprises permanent magnets, electromagnets, coils or other elements capable of generating a magnetic field.

2. Apparatus according to claim 1,
**characterised in that**
the first drive element (22) is a coupling device (22) which is rotatable about a third axis of rotation (Z) and the second drive element (24) is a second coupling device (24) which cooperates with the first coupling device (22), and the first coupling device (22) and the second coupling device (24) are configured in such a way that torques can be transmitted in a contactless manner from the first coupling device (22) to the second coupling device (24).

3. Apparatus (1) according to at least one of the preceding claims,
**characterised in that**
the apparatus (1) is an apparatus for closing containers (10) with closures and the treatment element (6) is a closing head (6) which is rotatable about its own axis (Z).

4. Apparatus according to at least one of the preceding claims,
**characterised in that**
the first drive element (22) is displaceable relative to the second drive element (24) in relation to at least one of the axes of rotation (Y, Z).

5. Apparatus (1) according to claim 3,
**characterised in that**
the second drive element (24) comprises a plurality of permanent magnets (34).

6. Apparatus (1) according to at least one of the preceding claims,
**characterised in that**
the first drive element (22) is arranged inside the second drive element (24) in relation to the second axis of rotation (Y).

7. Apparatus (1) according to claim 6,
**characterised in that**
the magnetic elements (32) of the first drive element (22) are longer than the magnetic elements (34) of the second drive element (24) in the direction of the second axis of rotation (Y).

8. Apparatus (1) according to at least one of the preceding claims,
**characterised in that**
the second drive element (24) is displaceable relative to the first drive element (22) by a predefined distance (S) and magnetisable elements of at least one coupling device (22, 24) are at least as long as this distance (S).

9. Apparatus (1) according to at least one of the preceding claims,
**characterised in that**
the carrier is rotatable about a carrier axis (T) and the carrier is coupled to the second drive element (24).

## Revendications

1. Dispositif (1) de traitement de contenants (10), comprenant un logement (2), à l'intérieur duquel une chambre stérile (4) est formée, un élément de traitement (6, 7) destiné à traiter les contenants, lequel élément de traitement (6, 7) est agencé à l'intérieur du logement (2) et peut être amené en rotation autour d'un axe (X, T) prédéfini, dans lequel l'élément de traitement est agencé sur un support (8) prévu à l'intérieur du logement (2), d'un système d'entraînement destiné à entraîner l'élément de traitement (6), dans lequel ce système d'entraînement est agencé au moins en partie à l'extérieur de la salle stérile (4),
**caractérisé en ce que**
le système d'entraînement comprend au moins un premier élément d'entraînement (22) agencé à l'extérieur de la chambre stérile (4) et destiné à produire des mouvements de rotation et l'élément de traitement (6) est couplé à un deuxième élément d'entraînement (24) agencé à l'intérieur de la chambre stérile (4) et pouvant tourner autour d'un deuxième axe de rotation (Y) prédéfini et destiné à transmettre des couples, dans lequel le premier élément d'entraînement (22) et le deuxième élément d'entraînement (24) coopèrent sans contact pour produire le mouvement de rotation de l'élément de traitement et sont séparés l'un de l'autre par au moins une paroi (20) et dans lequel les éléments d'entraînement (22, 24) présentent chacun au moins un élément magnétisable (32, 34) et de préférence au moins le deuxième élément d'entraînement (24) peut coulisser en direction de son axe de rotation (Y) par rapport à la chambre stérile (4), dans lequel l'élément magnétisable comporte des aimants permanents, des électroaimants, des bobines ou d'autres éléments qui sont adaptés à produire un champ magnétique.

2. Dispositif selon la revendication 1,
**caractérisé en ce que**
le premier élément d'entraînement (22) est un moyen de couplage (22) pouvant tourner autour d'un troisième axe de rotation (Z) et le deuxième élément d'entraînement (24) est un deuxième un moyen de couplage (24) coopérant avec le premier un moyen de couplage (22) et le premier un moyen de couplage (22) et le deuxième un moyen de couplage (24) sont de nature à pouvoir transmettre sans contact les couples du premier un moyen de couplage (22) au deuxième un moyen de couplage (24).

3. Dispositif (1) selon au moins l'une des revendications précédentes,
**caractérisé en ce que**
le dispositif (1) est un dispositif destiné à fermer les contenants (10) au moyen de fermetures et l'élément de traitement (6) est une tête de fermeture (6), qui peut tourner autour de son axe (Z) propre.

4. Dispositif selon au moins l'une des revendications précédentes,
**caractérisé en ce que**
le premier élément d'entraînement (22) peut coulisser vis-à-vis du deuxième élément d'entraînement (24) par rapport à au moins un des axes de rotation (Y, Z).

5. Dispositif (1) selon la revendication 3,
**caractérisé en ce que**
le deuxième élément d'entraînement (24) comprend une pluralité d'aimants permanents (34).

6. Dispositif (1) selon au moins l'une des revendications précédentes,
**caractérisé en ce que**
le premier élément d'entraînement (22) est agencé par rapport au deuxième axe de rotation (Y) à l'intérieur du deuxième élément d'entraînement (24).

7. Dispositif (1) selon la revendication 6,
**caractérisé en ce que**
les éléments magnétiques (32) du premier élément d'entraînement (22) dans la direction du deuxième axe de rotation (Y) sont plus longs que les éléments magnétiques (34) du deuxième élément d'entraînement (24).

8. Dispositif (1) selon au moins l'une des revendications précédentes,
**caractérisé en ce que**
le deuxième élément d'entraînement (24) peut coulisser par rapport au premier élément d'entraînement (22) le long d'une distance (S) prédéfinie et les éléments magnétisables d'au moins un moyen de couplage (22, 24) sont au moins aussi longs que cette distance (S).

9. Dispositif (1) selon au moins l'une des revendications précédentes,
**caractérisé en ce que**
le support peut tourner autour d'un axe de rotation (T) et le support est couplé au deuxième élément d'entraînement (24).
